# EUROPEAN PATENT APPLICATION

(11) **EP 3 156 889 A1**
(43) Date of publication of application: **19.04.2017**
(21) Application number: 14894755.9
(22) Date of filing: 19.09.2014
(51) Int. Cl.: G06F 3/0488

(54) **TERMINAL CONTROL METHOD AND DEVICE**

(30) Priority: 10.06.2014 CN 201410256202
(71) Applicant: ZTE Corporation, Shenzhen, Guangdong 518057 (CN)
(72) Inventor: ZHOU, Shujun, Shenzhen Guangdong 518057 (CN)
(74) Representative: Potter Clarkson LLP
(86) International application number: PCT/CN2014/086991
(87) International publication number: WO 2015/188503

(57) **Abstract**

Disclosed are a terminal control method and device. The method is used for a terminal with a display area. The method comprises: acquiring a first operation; in response to the first operation, analyzing to determine whether the first operation satisfies a first control policy, and if yes, then detecting whether a second operation exists, and obtaining a detection result of the analysis; when the detection result of the analysis indicates that the second operation exists, determining to detect whether the second operation complies with a second control policy, and if yes, then conducting processing corresponding to the second control policy so as to automatically adjust brightness and/or volume.

## Description

### TECHNICAL FIELD

The present disclosure generally relates to technical field of mobile communication, and more particularly, to a terminal control method and device.

### BACKGROUND

During the procedure of conceiving the technical proposal of the embodiments of the present disclosure, the inventor has found out technical problems as follows in related art.

In recent years, with the popularization of the computer and the internet, the mobile internet has exceeded traditional medias and has become one of the most important way of delivering an acquiring information at work and in daily life. The carrier of the mobile internet-the mobile phone, especially the touch-screen mobile phone, has also become an essential part of people's daily life.

At present for most touch-screen mobile phones, the user has to adjust the screen brightness manually, which requires the user to make a series of operations before entering the menu of brightness adjustment to make adjustments. So it's relatively complicated and inconvenient. Another screen brightness adjusting method is to set automatic mode of adjusting brightness, where a light sensor in a mobile phone detects light conditions of outside space and a background program controls the automatic brightness adjustment based on the detected result. Although brightness can be adjusted automatically with this method, in some cases users' individual demands of brightness cannot be met. For example, indoor light conditions and outdoor light conditions are different, for which the light sensor cannot make detections accurately enough. Therefore users may feel that the adjustment is not accurate enough in natural environment, either too dark or too bright. As a result, the user experience is not good and automatically adjusting to a suitable brightness level cannot be achieved. Meanwhile, the volume of most mobile phones also requires users to adjust manually.

So a technology proposal in which the lightness or the volume can be adjusted automatically according to a certain motion when the user feels the screen is too dark or too bright or feels the volume needs to be adjusted.

### SUMMARY

The present disclosure is directed to provide a terminal control method and device, which can enable automatic adjustment of the lightness or the volume according to a certain motion when the user feels the screen is too dark or too bright or feels the volume needs to be adjusted.

In order to achieve the purpose above, the embodiments of the present disclosure are as follows.

An embodiment of the present disclosure provides a terminal control method applied to a terminal including a display area. The method includes:
acquiring a first operation; detecting, in responding to the first operation, whether there is a second operation to obtain a detected result when the first operation conforms to a first control pattern; and executing, when the detected result indicates that the second operation exists and conforms to a second control pattern, an operation corresponding to the second control pattern so as to enable automatic adjustment of lightness and/or volume.

In an embodiment, the responding to the first operation includes: acquiring a sliding start point coordinate and a sliding end point coordinate of the first operation; and, correspondingly, confirming that the first operation conforms to the first control pattern when at least one of the sliding start point coordinate and the sliding end point locates in a given area; the given area includes at least one of a left area, a right area, an upside area and a downside area of the display area.

In an embodiment, the responding to the first operation includes: acquiring a sliding start point coordinate and a sliding end point coordinate of the first operation; and, correspondingly, confirming that the first operation conforms to the first control pattern when at least one of the sliding start point coordinate and the sliding end point locates in a given area; the given area includes at least one of a left area, a right area, an upside area and a downside area of the display area.

In an embodiment, after the detected result indicates that the second operation exists, the method includes: detecting an acting direction of the second operation; and, correspondingly, confirming that the second operation conforms to the second control pattern when the acting direction of the second operation is oriented toward at least one of an upside part, a downside part, a left part and a right part of the terminal.

In an embodiment, after the detected result indicates that the second operation exists, the method includes: detecting an acting direction of the second operation; and, correspondingly, confirming that the second operation conforms to the second control pattern when the acting direction of the second operation is oriented toward at least one of an upside part, a downside part, a left part and a right part of the terminal and matches a direction of the given area with respect to a center of the display area.

In an embodiment, the method includes: detecting a strength and/or a duration time of the first operation; and, correspondingly, the executing an operation corresponding to the second control pattern includes: executing the operation corresponding to the second control pattern according to the strength and/or the duration time of the first operation.

In an embodiment, the method includes: detecting an angular velocity and/or a number of times of the second operation; and, correspondingly, the executing an operation corresponding to the second control pattern includes: executing the operation corresponding to the second control pattern according to the angular velocity and/or the number of times of the second operation.

The embodiments of the present disclosure also provide a terminal control device applied to the terminal including a display area. The device includes: an acquiring module, a responding module and a processing module, wherein, the acquiring module is configured to acquire a first operation; the responding module is configured to detect, in responding to the first operation, whether there is a second operation to obtain a detected result when the first operation conforms to a first control pattern; and the processing module is configured to execute, when the detected result indicates that the second operation exists and conforms to a second control pattern, an operation corresponding to the second control pattern so as to enable automatic adjustment of lightness and/or volume.

In an embodiment, the responding module includes a first responding submodule configured to acquire a touching point coordinate of the first operation and confirm that the first operation conforms to the first control pattern when the touching point coordinate of the first operation locates in a given area; the given area includes at least one of a left area, a right area, an upside area and a downside area of the display area.

In an embodiment, the responding module includes a second responding submodule configured to acquire a sliding start point coordinate and a sliding end point coordinate of the first operation and confirm that the first operation conforms to the first control pattern when at least one of the sliding start point coordinate and the sliding end point locates in a given area; the given area includes at least one of a left area, a right area, an upside area and a downside area of the display area.

In an embodiment, the processing module is configured to detect an acting direction of the second operation and confirm that the second operation conforms to the second control pattern when the acting direction of the second operation is oriented toward at least one of an upside part, a downside part, a left part and a right part of the terminal.

In an embodiment, the processing module is configured to detect an acting direction of the second operation and confirm that the second operation conforms to the second control pattern when the acting direction of the second operation is oriented toward at least one of an upside part, a downside part, a left part and a right part of the terminal and matches a direction of the given area with respect to a center of the display area.

In an embodiment, the device further includes: a detecting module configured to detect a strength and/or a duration time of the first operation; correspondingly, the processing module is configured to execute the operation corresponding to the second control pattern according to the strength and/or the duration time of the first operation.

In an embodiment, the detecting module is further configured to detect an angular velocity and/or a number of times of the second operation; correspondingly, the processing module is configured to execute the operation corresponding to the second control pattern according to the angular velocity and/or the number of times of the second operation.

Any of the acquiring module, the responding module, the processing module, the first responding submodule, the second responding submodule and the detecting module can be realized by a CPU(Central Processing Unit), a DSP(Digital Signal Processor) or a FPGA (Field Programmable Gate Array) when executing the operation thereof.

The embodiments of the present disclosure provide a terminal control method and device. The method is applied to a terminal including a display area and includes: acquiring a first operation; detecting, in responding to the first operation, whether there is a second operation to obtain a detected result when the first operation conforms to a first control pattern; and executing, when the detected result indicates that the second operation exists and conforms to a second control pattern, an operation corresponding to the second control pattern so as to enable automatic adjustment of lightness and/or volume. In this way, the brightness and volume can be adjusted automatically at any time by certain movements without requiring the user to click on the screen repeatedly or remember complicated sliding operations. Moreover, the terminal control method provided by the embodiments of the present disclosure is more intuitive and convenient, increasing the user's ease of use and operational efficiency as well as preventing misoperations.

### BRIEF DESCRIPTION OF THE DRAWINGS

Fig. 1 is a flow chart illustrating a terminal control method according to an exemplary embodiment of the present disclosure.
Fig. 2 is a flow chart illustrating a terminal control method according to an exemplary application embodiment of the present disclosure.
Fig. 3 is a block diagram illustrating a terminal control device according to an exemplary embodiment of the present disclosure.
Fig. 4 is a block diagram illustrating a terminal control device according to another exemplary embodiment of the present disclosure.

### DETAILED DESCRIPTION

According to an embodiment of the present disclosure, in a terminal including a display area, a first operation is acquired; it is detected, in responding to the first operation, whether there is a second operation to obtain a detected result when the first operation conforms to a first control pattern; and it is executed, when the detected result indicates that the second operation exists and when the second operation conforms to a second control pattern, an operation corresponding to the second control pattern so as to enable automatic adjustment of lightness and/or volume.

Further details of the present disclosure are described below with reference to the drawings and the embodiments.

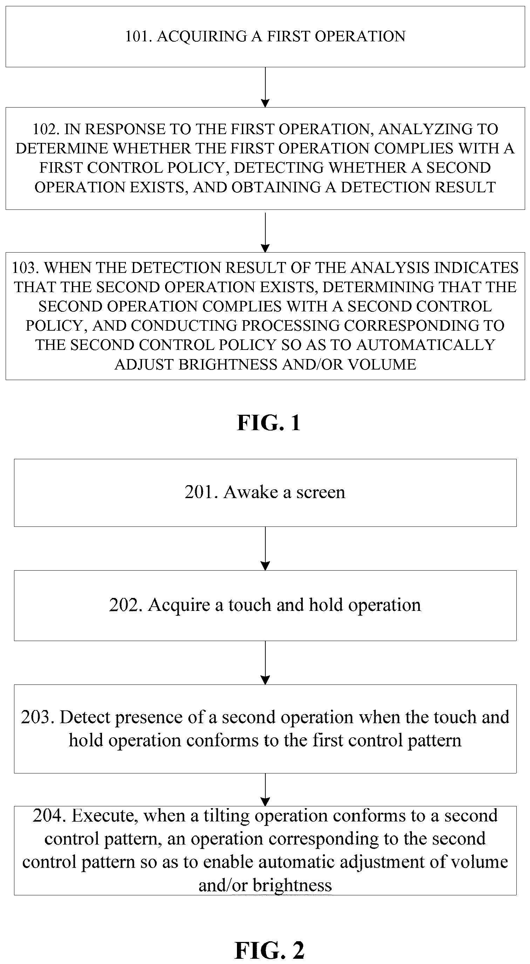

Fig. 1 illustrates a terminal control method, which is applied to a terminal including a display area. As shown in Fig.1, the method includes the following steps.

Step 101, a first operation is acquired.

The first operation is acquired when the user is preforming the first operation on a terminal, wherein the first operation may be a touching operation on the display area, or a sliding operation with a sliding start point and a sliding end point on the display area. In an embodiment, the touching point coordinate of the first operation is acquired when the first operation is a touching operation, and the sliding start point and the sliding end point are acquired when the first operation is a sliding operation with a sliding start point and a sliding end point.

Step 102, it is detected, in responding to the first operation, whether there is a second operation to obtain a detected result when the first operation conforms to a first control pattern.

In an embodiment, the first operation is responded after it is required. Specifically, it is determined whether the first operation conforms to the first control pattern. If the first operation conforms to the first control pattern, it is detected whether there is a second operation to obtain the detected result.

In an embodiment, the touching point coordinate of the first operation is acquired in step 101. Then, it is determined whether the first operation conforms to the first control pattern when the touching point coordinate of the first operation locates in a given area. In an embodiment, the given area includes at least one of areas in the left, in the right, in the upside and in the downside of the display area.

In an embodiment, the sliding start point coordinate and the sliding end point coordinate of the first operation are acquired in step 101. Then, it is determined that the first operation conforms to the first control pattern when at least one of the sliding start point coordinate and the sliding end point locates in at least one of the given areas. The given area includes at least one of areas in the left, in the right, in the upside and in the downside of the display area.

It is detected whether there is a second operation when it is determined that the first operation conforms to the first control pattern. In an embodiment, the detected result focuses only on whether the second operation exists but does not limit the order of the first operation and the second operation. The first operation may be acquired before the second operation is acquired, or the second operation may be acquired before the first operation is acquired, or both the first operation and the second operation may be acquired at the same time.

Step 103, it is executed, when the detected result indicates that the second operation exists and when the second operation conforms to a second control pattern, an operation corresponding to the second control pattern so as to enable automatic adjustment of lightness and/or volume.

In an embodiment, when the existence of the second operation is confirmed according to the detected result, that is, when the user has performed the second operation, it is detected whether the second operation conforms to the second pattern. In an embodiment, an acting direction of the second operation is detected and the determination on whether the second operation confirms to the second pattern is made according to the acting direction of the second operation. In an embodiment, there are two following ways to make this determination.

The first one is to determine that the second operation conforms to the second control pattern when the acting direction of the second operation is oriented toward at least one of an upside part, a downside part, a left part and a right part of the terminal.

The second one is to determine that the second operation conforms to the second control pattern when the acting direction of the second operation is oriented toward at least one of the upside part, the downside part, the left part and the right part of the terminal and the acting direction of the second operation matches a direction of the given area, where the first operation is applied on, with respect to a center of the display area.

Then an operation corresponding to the second control pattern is executed to have the lightness and/or the volume to be adjusted automatically when the second operation conforms to the second control pattern.

In an embodiment, the method of the present disclosure may also include detecting a strength and/or a duration time of the first operation. Correspondingly, the execution of the operation corresponding to the second control pattern includes executing the operation corresponding to the second control pattern according to the strength and/or the duration time of the first operation.

The method of the present disclosure may also include detecting an angular velocity and/or a number of times of the second operation. Correspondingly, the execution of the operation corresponding to the second control pattern includes executing the operation corresponding to the second control pattern according to the angular velocity and/or the number of times of the second operation.

In an embodiment of the present disclosure, the second operation includes a tilting operation, a shaking operation or the like that is operated on a terminal. The embodiments of the present disclosure do not limit specific forms of the operations. The angular velocity may be detected if the second operation is a tilting operation. Alternatively, the number of times may be detected if the second operation is a shaking operation.

It should be noted that, by means of the terminal control method of the present disclosure, the brightness and the volume can be adjusted separately or at the same time according to acquired system settings of the user.

Fig. 2 illustrates a specific application embodiment of the terminal control method of the present disclosure. A description of the terminal control method of the embodiment of the present disclosure is provided here, with an example in which the first operation is a touch and hold operation on the display area and the second operation is a tilting operation on the terminal, and a direction of a given area, where the first operation is applied on, matches that of the second operation. As shown in Fig.2, the method includes the following steps.

Step 201, the screen is awakened.

For a terminal in non-working status, the screen as the display area is locked. So the screen needs to be awakened before the first operation is acquired. The terminal acquires the awakening operation when the user awakens the terminal and awakens the screen according to the awakening operation.

Step 202, a touch and hold operation is acquired.

After the screen is awakened, a touch and hold operation on the terminal by the user is acquired when the user is preforming the touch and hold operation on the awakened screen.

Step 203, it is detected whether there is a second operation when it is confirmed that the touch and hold operation conforms to the first control pattern.

After the touch and hold operation is acquired, the touching point coordinate of the touch and hold operation on the screen is detected. Then it is determined whether the touching point coordinate locates in a given area of the screen, that is, whether the touching point locates in at least one of areas in the left, in the right, in the upside and in the downside of the display area. If the touch and hold operation conforms to the first control pattern, it is detected whether there is a second operation. Step 204 is performed when the detected result indicates the existence of the second operation. Herein, the second operation may be a tilting operation.

In an embodiment, the given area is a valid area of the first operation, which may be a status bar on the screen or an area not covered by any launched application.

Step 204, an operation corresponding to a second control pattern is executed to enable automatic adjustment of the lightness and/or the volume.

In an embodiment, the direction of a tilting operation is detected when the existence of the tilting operation is confirmed. An operation corresponding to the second control pattern is executed to adjust the lightness and/or the volume when an acting direction of the tilting operation is oriented toward at least one of an upside part, a downside part, a left part and a right part of the terminal and the acting direction of the tilting operation matches a direction of the given area, where the touching point coordinate of the touch and hold operation locates in, with respect to a center of the display area.

For example, the operation of leftward tilting performed when the given area, where the touching point coordinate of the touch and hold operation locates in, is in the left of the screen may decrease the lightness of the screen or the volume, while the operation of rightward tilting performed when the given area, where the touching point coordinate of the touch and hold operation locates in, is in the right of the screen may increase the lightness of the screen or the volume. Alternatively, the operation of leftward tilting performed when the given area, where the touching point coordinate of the touch and hold operation locates in, is in the left of the screen may increase the lightness of the screen or the volume, while the operation of rightward tilting performed when the given area, where the touching point coordinate of the touch and hold operation locates in, is in the right of the screen may decrease the lightness of the screen or the volume. The operation of upward tilting performed when the given area, where the touching point coordinate of the touch and hold operation locates in, is in the upside of the screen may decrease the lightness of the screen or the volume, while the operation of downward tilting performed when the given area, where the touching point coordinate of the touch and hold operation locates in, is in the downside of the screen may increase the lightness of the screen or the volume. Alternatively, the operation of upward tilting performed when the given area, where the touching point coordinate of the touch and hold operation locates in, is in the upside of the screen may increase the lightness of the screen or the volume, while the operation of downward tilting performed when the given area, where the touching point coordinate of the touch and hold operation locates in, is in the downside of the screen may decrease the lightness of the screen or the volume.

In the exemplary embodiment shown in Fig.2, information of the first operation such as a strength or a duration time of the touch and hold operation can be detected in step 202, and an adjustment scale of the brightness or the volume can be regulated according to the information of the first operation. In an embodiment, the heavier the strength of the first operation is, the greater the adjustment scale of the brightness or the volume is. For example, the adjustment scale of the brightness or the volume is 10% when the strength is 1 Newton, and the adjustment scale of the brightness or the volume is 20% when the strength is 2 Newton. In another embodiment, the longer the duration time of the first operation is, the greater the adjustment scale of the brightness or the volume is. For example, the adjustment scale of the brightness or the volume is 10% when the duration time is 0.5 seconds, and the adjustment scale of the brightness or the volume is 20% when the duration time is 1 second.

In a practical embodiment, the tilting angle can be detected in step 203. The larger the angle is, the greater the adjustment scale of the brightness or the volume is. For example, the adjustment scale of the brightness or the volume is 10% when the angle is 1°, and the adjustment scale of the brightness or the volume is 20% when the angle is 2°.

In a practical embodiment, the second operation can be a shaking operation. As to the shaking operation, execution of the operation corresponding to the second control pattern for adjustment of the lightness and/or the volume may include following steps.

An acting direction of the shaking operation is acquired.

The operation of leftward shaking performed when the given area, where the touching point coordinate of the touch and hold operation locates in, is in the left of the screen may decrease the lightness of the screen o the volume, while the operation of rightward shaking performed when the given area, where the touching point coordinate of the touch and hold operation locates in, is in the right of the screen may increase the lightness of the screen o the volume. Alternatively, the operation of leftward shaking performed when the given area, where the touching point coordinate of the touch and hold operation locates in, is in the left of the screen may increase the lightness of the screen o the volume, while the operation of rightward shaking performed when the given area, where the touching point coordinate of the touch and hold operation locates in, is in the right of the screen may decrease the lightness of the screen o the volume.

Similarly, the number of times of the shaking operation can be detected in step 203. The larger the number of times of the shaking operation is, the lager the adjustment scale of the brightness or the volume is. For example, the adjustment scale of the brightness or the volume is 10% when the number of times is 1, the adjustment scale of the brightness or the volume is 20% when the number of times is 2.

In a practical embodiment, the orientation of the given area on the display area and/or the relation between the acting direction of the second operation and the adjustment scale of the brightness or the volume, can be set by the user and are not limited by the embodiments of the present disclosure. Moreover, the present disclosure does not confine that the brightness or the volume is adjusted only when the orientation and direction above matches.

The technical proposal of adjusting the brightness by sliding on the screen has problems below compared with the terminal control method provided by the present disclosure. It is easy to cause an operation failure if an original area or a target area is too small, or if the user's operation is not in place. Moreover, the user is required to remember the operation steps. The user may easily forget the operation steps if the steps are too complicated, which may lead to an adjustment failure. Thus, the operation is complicated and is not convenient and efficient enough for the user.

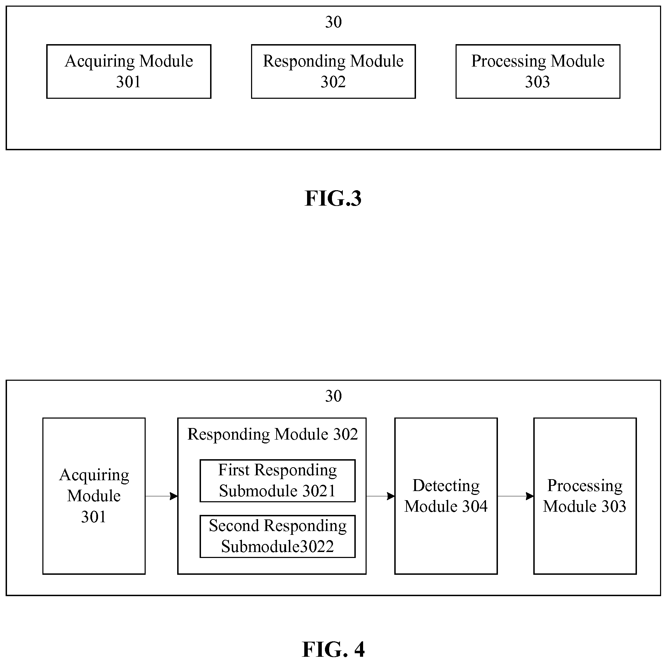

The embodiments of the present disclosure also provide a terminal control device 30 applied on a terminal to implement the method above. The terminal includes a display area. As shown in Fig. 3, the device 30 includes: an acquiring module 301, a responding module 302 and a processing module 303.

The acquiring module 301 is configured to acquire a first operation;
The responding module 302 is configured to detect, in responding to the first operation, whether there is a second operation to obtain a detected result when the first operation conforms to a first control pattern;
The processing module 303 is configured to execute, when the detected result indicates that the second operation exists and when the second operation conforms to a second control pattern, an operation corresponding to the second control pattern so as to enable automatic adjustment of lightness and/or volume.

As shown in Fig.4, the responding module 302 includes a first responding submodule 3021 configured to acquire a sliding start point coordinate and a sliding end point coordinate of the first operation and confirm that the first operation conforms to a first control pattern when at least one of the sliding start point coordinate and the sliding end point locates in at least one of the given areas. The given area includes at least one of areas in the left, in the right, in the upside and in the downside of the display area.

As shown in Fig.4, the responding module 302 includes a second responding submodule 3022 configured to acquire a sliding start point coordinate and a sliding end point coordinate of the first operation and confirm that the first operation conforms to a first control pattern when at least one of the sliding start point coordinate and the sliding end point locates in at least one of the given areas. The given area includes at least one of areas in the left, in the right, in the upside and in the downside of the display area.

The processing module 303 is further configured to detect an acting direction of the second operation and confirm that the second operation conforms to the second control pattern when the acting direction of the second operation is oriented toward at least one of an upside part, a downside part, a left part and a right part of the terminal.

The processing module 303 is further configured to detect an acting direction of the second operation and confirm that the second operation conforms to the second control pattern when the acting direction of the second operation is oriented toward at least one of the upside part, the downside part, the left part and the right part of the terminal and the acting direction of the second operation matches a direction of the given area, where the first operation is applied on, with respect to a center of the display area.

As shown in Fig.4, the device 30 also includes: a detecting module 304 configured to detect a strength and/or a duration time of the first operation. Correspondingly, the processing module 303 is configured to execute an operation corresponding to a second control pattern according to the strength and/or the duration time of the first operation.

As shown in Fig.4, the detecting module 304 is also configured to detect an angular velocity and/or a number of times of the second operation. Correspondingly, the processing module 303 is configured to execute an operation corresponding to a second control pattern according to the angular velocity and /or the number of times of the second operation.

In practice, the device or system device provided by the present disclosure can either be an individual system or include logical units with different functions added in a present terminal like a mobile phone.

When the logical units are added in a mobile phone, the acquiring module 301, the responding module 302, the processing module 303 and the detecting module 304 can be implemented by a CPU(Central Processing Unit), a DSP(Digital Signal Processor) or a FPGA (Field Programmable Gate Array) in the mobile phone.

The embodiments of the disclosure above are exemplary embodiments and the scope of the disclosure is not limited to the embodiments above. Various modifications, additions and changes are still possible for those skilled in the art and are included in the scope of the present disclosure.

### INDUSTRIAL APPLICABILITY

The embodiments of the present disclosure provide a terminal control method and device. The method is applied to a terminal including a display area and includes: acquiring a first operation; detecting, in responding to the first operation, whether there is a second operation to obtain a detected result when the first operation conforms to a first control pattern; and executing, when the detected result indicates that the second operation exists and conforms to a second control pattern, an operation corresponding to the second control pattern so as to enable automatic adjustment of lightness and/or volume. In this way, the user can have the brightness or the volume adjusted automatically anytime by certain movements without necessity to click on the screen time after time or remember complicated sliding operations. Moreover, the terminal control method provided by the embodiments of the present disclosure is more intuitive and convenient, increasing the user's ease of use and operational efficiency as well as preventing misoperations.

## Claims

1. A terminal control method, applied to a terminal comprising a display area, wherein the method comprises:
acquiring a first operation;
detecting, in responding to the first operation, whether there is a second operation to obtain a detected result when the first operation conforms to a first control pattern; and
executing, when the detected result indicates that the second operation exists and conforms to a second control pattern, an operation corresponding to the second control pattern so as to enable automatic adjustment of lightness and/or volume.

2. The terminal control method of claim 1, wherein the responding to the first operation comprises:
acquiring a touching point coordinate of the first operation; and
confirming that the first operation conforms to the first control pattern when the touching point coordinate of the first operation locates in a given area;
the given area includes at least one of a left area, a right area, an upside area and a downside area of the display area.

3. The terminal control method of claim 1, wherein the responding to the first operation comprises:
acquiring a sliding start point coordinate and a sliding end point coordinate of the first operation; and
confirming that the first operation conforms to the first control pattern when at least one of the sliding start point coordinate and the sliding end point locates in a given area;
the given area includes at least one of a left area, a right area, an upside area and a downside area of the display area.

4. The terminal control method of claim 2 or 3, wherein when the detected result indicates that the second operation exists, the method comprises:
detecting an acting direction of the second operation; and
confirming that the second operation conforms to the second control pattern when the acting direction of the second operation is oriented toward at least one of an upside part, a downside part, a left part and a right part of the terminal.

5. The terminal control method of claim 2 or 3, wherein when the detected result indicates that the second operation exists, the method comprises:
detecting an acting direction of the second operation; and
confirming that the second operation conforms to the second control pattern when the acting direction of the second operation is oriented toward at least one of an upside part, a downside part, a left part and a right part of the terminal and matches a direction of the given area, where the first operation is applied on, with respect to a center of the display area.

6. The terminal control method of claim 5, further comprising:
detecting a strength and/or a duration time of the first operation; and
the executing an operation corresponding to the second control pattern comprises:
executing the operation corresponding to the second control pattern according to the strength and /or the duration time of the first operation.

7. The terminal control method of claim 5, further comprising:
detecting an angular velocity and/or a number of times of the second operation; and
the executing an operation corresponding to the second control pattern comprises:
executing the operation corresponding to the second control pattern according to the angular velocity and/or the number of times of the second operation.

8. A terminal control device, applied to a terminal comprising a display area, wherein the device comprises an acquiring module, a responding module and a processing module, wherein,
the acquiring module is configured to acquire a first operation;
the responding module is configured to detect, in responding to the first operation, whether there is a second operation to obtain a detected result when the first operation conforms to a first control pattern; and
the processing module is configured to execute, when the detected result indicates that the second operation exists and conforms to a second control pattern, an operation corresponding to the second control pattern so as to enable automatic adjustment of lightness and/or volume.

9. The terminal control device of claim 8, wherein the responding module comprises a first responding submodule configured to acquire a sliding start point coordinate and a sliding end point coordinate of the first operation and confirm that the first operation conforms to the first control pattern when at least one of the sliding start point coordinate and the sliding end point locates in a given area;
the given area includes at least one of the a left area, a right area, an upside area and a downside area of the display area.

10. The terminal control device of claim 8, wherein the responding module comprises a second responding submodule configured to acquire a sliding start point coordinate and a sliding end point coordinate of the first operation and confirm that the first operation conforms to the first control pattern when at least one of the sliding start point coordinate and the sliding end point locates in a given area;
the given area includes at least one of a left area, a right area, an upside area and a downside area of the display area.

11. The terminal control device of claim 9 or 10, wherein the processing module is configured to detect an acting direction of the second operation and confirm that the second operation conforms to the second control pattern when the acting direction of the second operation is oriented toward at least one of an upside part, a downside part, a left part and a right part of the terminal.

12. The terminal control device of claim 9 or 10, wherein the processing module is configured to detect an acting direction of the second operation and confirm that the second operation conforms to the second control pattern when the acting direction of the second operation is oriented toward at least one of an upside part, a downside part, a left part and a right part of the terminal and matches a direction of the given area, where the first operation is applied on, with respect to a center of the display area.

13. The terminal control device of claim 12, further comprising:
a detecting module configured to detect a strength and/or a duration time of the first operation;
the processing module is configured to execute the operation corresponding to the second control pattern according to the strength and/or the duration time of the first operation.

14. The terminal control device of claim 13, wherein the detecting module is further configured to detect an angular velocity and/or a number of times of the second operation;
the processing module is configured to execute the operation corresponding to the second control pattern according to the angular velocity and/or the number of times of the second operation.
